# EUROPÄISCHE PATENTSCHRIFT

(11) **EP 1 173 821 B1**
(45) Veröffentlichungstag und Bekanntmachung des Hinweises auf die Patenterteilung: **21.01.2004**
(21) Anmeldenummer: 00929408.3
(22) Anmeldetag: 21.04.2000
(51) Int. Cl.: G06F 17/60

(54) **SYSTEM ZUM VERBESSERTEN VERSORGEN EINES REISENDEN MIT REISEINFORMATIONEN**
SYSTEM FOR IMPROVING THE SUPPLY OF TRAVEL INFORMATION TO A TRAVELER
SYSTEME POUR FOURNIR DE MEILLEURES INFORMATIONS DE VOYAGE A UN VOYAGEUR

(30) Priorität: 26.04.1999 DE 19918705
(43) Veröffentlichungstag der Anmeldung: 23.01.2002
(73) Patentinhaber: Deutsches Zentrum für Luft- und Raumfahrt e.V., 51147 Köln (DE); Sun Microsystems GmbH, 85551 Heimstetten (DE)
(72) Erfinder: ANGERMANN, Michael, D-82166 Gräfelfing (DE); STEINGASS, Alexander, D-82205 Gilching (DE); ROBERTSON, Patrick, D-82541 Ammerland (DE); HILLER, Wolf, D-85521 Hohenbrunn (DE); Groth, Thomas, 86911 Diessen (DE)
(74) Vertreter: von Kirschbaum, Albrecht, Dipl.-Ing.
(86) Internationale Anmeldenummer: PCT/EP2000/003649
(87) Internationale Veröffentlichungsnummer: WO 2000/065497

(56) Entgegenhaltungen:
- DE-A- 19 837 568
- COLLURA J ET AL: "EXPERIENCE WITH AN ADVANCED TRAVELLER INFORMATION SYSTEM TRIAL TEST IN THE METROPOLITAN NEW YORK CITY AREA" PROCEEDINGS OF THE 1ST WORLD CONGRESS ON APPLICATIONS OF TRANSPORT TELEMATICS AND INTELLIGENT VEHICLE HIGHWAY SYSTEMS, Bd. 5, 30. November 1994 (1994-11-30) - 3. Dezember 1994 (1994-12-03), Seiten 2394-2401, XP000998411

## Beschreibung

### Technisches Gebiet

Die Erfindung betrifft ein System zum verbesserten Versorgen eines Reisenden mit Reiseinformationen.

### Stand der Technik

Bei dem Planen einer Reise von einem Start- zu einem Zielort muß sich ein Reisender heutzutage zunächst eine Übersicht über vorhandene Informationsquellen verschaffen. Sind die Informationsquellen, wie beispielsweise Fluglinien, Bus- und Bahngesellschaften u.ä., identifiziert, müssen Informationen über die Verkehrsmittel eingeholt werden. Anschließend muß ein sogenanntes Routing durchgeführt werden, wobei der optimale Weg vom Start- zum Zielort gefunden werden muß. Schließlich müssen im allgemeinen die benötigten Verkehrsmittel, zumindest gebucht, gegebenenfalls auch bereits entsprechende Beträge angewiesen werden.

Zum Durchführen der Reise muß der Reisende zum geplanten Startzeitpunkt die Reise antreten und anschließend dem Reiseplan so gut wie möglich folgen. Treten unterwegs Probleme auf, beispielsweise aufgrund verpaßter Anschlüsse, hat der Reisende den Reiseverlauf neu zu planen.

Zur Zeit stehen einem Reisenden bei dem Planen einer Reise eine Reihe von Nachrichten-, Informations- und Dienstequellen zur Verfügung. Beispielsweise bieten im Internet bereits verschiedene Firmen Routing-Dienste an. Beispielsweise bietet die Deutsche Bahn AG eine Möglichkeit, eine Bahnreise von der Stadt A zur Stadt B zu planen. Ferner bieten verschiedene Fluggesellschaften den Service an, Flugreisen von Flughafen C nach Flughafen D zu planen.

Einem Reisenden stehen somit vielfältige Fahrpläne für die verschiedenen Einzelverbindungen zur Verfügung. Diese stehen oft sogar in elektronischer Form, beispielsweise auf CD, im Internet u.ä. zur Verfügung. Ferner bieten verschiedene Reisebüros dem Reisenden an, einen Teil der Planungsarbeit abzunehmen. Über lokale Touristen-Informationen werden dem Reisenden beispielsweise Öffnungszeiten von Museen, von Kaufhäuser usw. angeboten. Über Hotel- und Gaststättenverbände kann der Reisende Reservierungen vornehmen, sich über freie Zimmer informieren, u.ä.. Ebenso sind häufig aktuelle Informationen am Zielort, wie Veranstaltungen, Kinoprogramme, Kulturangebote, Sondermeldungen, u.ä. über Stadtinformationsdienste verfügbar.

Mit Hilfe von Telekommunikations- und Navigationsdiensten kann ein Reisender seine Position unter Zuhilfenahme von Navigationssystemen wie beispielsweise GPS (Global Positioning System) bestimmen. Ferner kann er unter Inanspruchnahme von Kommunikationsnetzen, wie GSM (Global System Mobile Communications; Mobilfunkstandard), IrDA (Infrared Data; Infrarot Standard), u.ä., kommunizieren.

Die Nachteile des Standes der Technik liegen unter anderem darin, daß sich der Reisende durch eine Flut von Informationsquellen durcharbeiten und seine Reise im wesentlichen selbst planen muß; bis heute ist bezüglich Informationsquellen noch nichts automatisiert. Wie vorstehend ausgeführt, kann er sich einer Reiseplanungsgesellschaft bedienen, die für ihn einen Teil dieser Arbeit erledigt. Jede dieser Gesellschaften hat jedoch das Problem, daß sie auf sehr viele heterogene Informationsquellen zugreifen muß.

Folglich müssen alle Informationsquellen nach einem vorher festgelegten Muster (Standard) die erforderlichen Informationen an den Reisenden und/oder an die jeweilige Reiseplanungsgesellschaft übertragen. Ein weiterer Nachteil beim Stand der Technik liegt darin, daß bei Ausfall einer Kommunikationsverbindung nicht weiter gerechnet und damit auch nicht weiter geplant werden kann, wenn zuvor über einen Server im Internet die Reise organisiert wurde.

Hierzu ist ein enormer Standardisierungsaufwand für die einzelnen Übertragungen erforderlich; dies ist vor allem dadurch bedingt, daß beim Stand der Technik die Schnittstellen auf einem sehr hohen Niveau mit sehr großer Detaillierung realisiert werden müßten. Ein solcher Standardisierungsaufwand läßt sich jedoch nur sehr schwer finanzieren und als Weltstandard durchsetzen.

Ein weiterer Nachteil des Standes der Technik besteht darin, daß neue, zum Zeitpunkt der Standardisierung noch nicht bekannte oder auch noch nicht etablierte Informationsquellen oder Reiseobjekte, beispielsweise Verbindungen, Veranstaltungen u.ä., sich nicht im Standard wiederfinden. Das bedeutet, der vorstehend skizzierte Übertragungsstandard wäre, wenn er erstellt worden ist, bereits veraltet. Auch eine Vernetzung von verschiedenen lokalen Quellen, wie NAV-(Navigations-) Empfänger/oder lokale Navigationsbaken u.ä., mit einem globalen Reiseplanungsservice, beispielsweise im Internet, ist aufgrund der Heterogenität derzeit schwierig.

Um auf Veränderungen, wie verpaßte oder verspätete Verbindungen, überbuchte Hotels, ausgefallene Züge u.ä., reagieren zu können, muß der Reisende wiederum auf seine Informationsquellen zugreifen, seine Reiseplanung überprüfen und gegebenenfalls ändern. Mit den begrenzten, ihm auf der Reise zur Verfügung stehenden Mitteln wird ihm das nur schwer, in vielen Fällen überhaupt nicht gelingen, und zwar insbesondere auch deswegen, weil sein Reisebegleiter beispielsweise in Form eines Laptop, eines PDA, u.ä. eine nur begrenzte Rechen- und Speicherkapazität hat.

Auch hier macht sich die extrem heterogene Struktur des Informationsangebots sehr nachteilig bemerkbar, da ein Reisender beispielsweise bei einer nationalen Bahn-Auskunft nicht erfahren kann, ob er trotz einer Zugverspätung eine Busverbindung zwischen beispielsweise zwei außereuropäischen Städten noch erreichen wird. Ebenso macht sich die Heterogenität der Kommunikationssysteme, wie GSM, UMTS (Universal Mobile Telecommunications System; Mobilfunkstandard), IrDA u.ä., nachteilig bemerkbar.

Auch bei Erreichen des Zielorts muß sich ein Reisender gegebenenfalls auch noch mit einer Fülle von Informationssystemen befassen. Möglicherweise muß er auch seine Bonusmeilen-Konten überwachen. Dies alles muß ein Reisender heute manuell vornehmen, wofür wiederum ein großer zeitlicher Aufwand aufzubringen ist.

### Darstellung der Erfindung

Aufgabe der Erfindung ist es daher, bereits beim Vorbereiten und Planen einer Reise sowie vor allem beim Durchführen und insbesondere beim Auftreten von Problemen während der Reise beispielsweise in Form von Unterbrechungen, Verzögerungen, versäumten Anschlüssen u.ä. einem Reisenden intensiv zu unterstützen, um dadurch die Reise insgesamt kontrollierbarer und sicherer zu gestalten und ferner, die gesamten Vorkehrungen, so gut wie nur irgend möglich zu automatisieren.

Gemäß der Erfindung ist diese Aufgabe, mit einem System zum verbesserten Versorgen eines Reisenden mit Reiseinformation durch die Merkmale im Anspruch 1 gelöst. Vorteilhafte Weiterbildungen sind Gegenstand der auf den Anspruch 1 unmittelbar oder mittelbar rückbezogenen Ansprüche

Gemäß der Erfindung sind zum verbesserten Versorgen eines Reisenden mit Reiseinformationen neben mindestens einem Reisebegleiter, der als eine Mensch-Maschine-Schnittstelle fungiert, und/oder eine Mensch-Maschine-Schnittstelle steuert ein oder mehrere Reiseassistenten, die mit dem Reisebegleiter zusammenwirken, sowie Informationen anbietende Einheiten vorgesehen, mit welchen der (die) Reiseassistent(en) über den Reisebegleiter ständig oder temporär in Verbindung steht (stehen).

Gemäß der Erfindung erfolgt hierbei die Art des Zusammenwirkens über ein flexibles Interface-Verfahren, das mindestens die Komponenten-Service-Anbieter, Service-Nutzer und Lookup-Service aufweist und mindestens einen der Schritte Entdecken und Eintreten, Nachschlagen und Service-Invokation sowie gegebenenfalls auch noch Mieten ausführt. Die Verbindung zwischen einem oder mehreren Reiseassistenten und dem Reisebegleiter bzw. zwischen Reiseassistent(en) und/oder den Serviceanbietern wird über ein oder mehrere Maschine-Maschine-Schnittstellen ausgeführt.

Hierbei ist eine Maschine-Maschine-Schnittstelle gemäß der Erfindung vorzugsweise durch besonders einfache, erweiterbare Beschreibungen realisiert. Ferner wird gemäß der Erfindung Rechenleistung und/oder auch Speicherinhalt und/oder können Rechenprozesse auf einen oder mehrere Reisebegleiter und auch auf einen oder mehrere Reiseassistenten, gegebenenfalls zeitlich und/oder örtlich dynamisch verteilt.

Gemäß der Erfindung können somit durch Verwenden der besonders einfach ausgebildeten Maschine-Maschine-Schnittstellen zu einem aktuellen Betriebszeitpunkt Ergänzungen zu den Schnittstellen-Objekten realisiert werden. Durch die Verwendung einer Interface-Beschreibung beispielsweise mit Hilfe der von Sun Microsystems entwickelten Netzwerktechnologie, die inzwischen unter der Bezeichnung JINI (eingetragene Marke) eingeführt ist, ist der Entwicklungsaufwand stark reduziert, da viele Funktionen aus dieser Umgebung verwendet werden können und somit die Vernetzung von Computern und ihrer Peripherie enorm vereinfacht ist. ("JINI" steht für "JAVA Intelligent Network Infrastructure").

Bei der JINI-Netzwerktechnologie werden jede Komponente, jedes Gerät bzw. jede Maschine im Netzwerk mit ein wenig eigener Intelligenz ausgestattet in Form eines kleinen Chip, der mit den übrigen Netzgliedern kommuniziert. Sobald ein "JINI"-taugliches Gerät an das Netzwerk angekoppelt wird, meldet es sich selbständig bei einem sogenannten Lookup-Service an, wobei der Lookup-Service ein auf einem Automaten durchgeführtes Verfahren ist.

Voraussetzung für die Verwendung der Netzwerktechnologie "JINI" ist die ebenfalls von Sun Microsystems entwickelte Programmiersprache "JAVA" (eingetragene Marke). Hierzu wurde für praktisch jeden Computer-Typ eine Art "Dolmetscher-Programm" entwickelt, die JAVA Virtual Machine (JVM), mit welchem der JAVA-Programm-Code in eine für den Rechner verständliche Sprache übersetzt wird. Dadurch läßt sich Software theoretisch problemlos auf allen Plattformen nutzen, unter der Voraussetzung, daß dort die entsprechende JVM vorgesehen ist. Die Netzwerktechnologie "JINI" ist so klar und einfach strukturiert, daß lediglich 48kBytes binärer JAVA Code ausreichen, um die gesamte Funktionalität sicherzustellen.

Gemäß der Erfindung spielt es dann durch das Benutzen von aktiven Schnittstellen für den oder die Reiseassistenten keine Rolle mehr, wo die verschiedenen Services verfügbar sind.

Aufgrund der flexiblen verteilten Architektur ist somit ein mobiler Reisebegleiter geschaffen, der fast alle auf einer Reise auftretenden Eventualitäten begleiten und lösen kann.

Ferner kann ein als Smart-Caching bezeichnete Funktionalität Flächen- und Speicherbedarf im mobilen Reisebegleiter reduzieren. Dadurch verringert sich der Energiebedarf erheblich und es ergeben sich längere Akku- bzw. Batterielaufzeiten. Ferner kann durch Smart-Caching eine Reisedurchführung auch bei (vorübergehenden) Störungen auf dem Übertragungsweg zumindest teilweise gewährleistet werden. Ferner können durch den gemäß der Erfindung vergleichsweise geringen Realisierungs- und Standardisierungsaufwand global operierende Reisedurchführungs- und Planungsdienste betrieben werden.

Ein weiterer Vorteil des erfindungsgemäßen Systems besteht darin, daß der Reiseassistent um beliebige Funktionen erweitert werden kann, die nicht unmittelbar mit einer Reise in Verbindung stehen. In jedem Fall wird ein Nutzer des erfindungsgemäßen Systems, d.h. ein Reisender, von normalerweise üblichen Konfigurationsaufgaben entbunden und es steht ihm ein leicht zu bedienender Reisebegleiter zur Verfügung. Somit wird durch das erfindungsgemäße System ein wesentlich größerer Personenkreis erschlossen, beispielsweise ältere Menschen, die im Umgang mit Daten verarbeitenden Endgeräten ungeübt sind.

Ein weiterer großer Vorteil des erfindungsgemäßen Systems besteht auch darin, daß auf jeden Fall der Reisebegleiter und damit in vielen Fällen auch der Reisende selbst vor Ort alle lokalen Dienste und alle lokalen Einrichtungen beispielsweise in Form von Informationssäulen, Informations- oder Navigationsbaken u.ä. nutzen kann.

### Beschreibung der Zeichnungen

Es zeigen:
- Fig.1: schematisch ein Beispiel eines Maschine-Maschine-Schnittstellen-Interface;
- Fig.2: ein Beispiel einer besonders einfachen Maschine-Maschine-Schnittstelle, die gegebenenfalls auch erweiterbar ist (Fig.2a);
- Fig.3: eine schematische Wiedergabe eines Gesamtsystems zum Organisieren von Reisen;
- Fig.4: eine schematische Darstellung von Lookup-Service "Entdecken";
- Fig.5: eine schematische Darstellung von Lookup-Service "Eintreten";
- Fig.6: eine schematische Darstellung von Lookup-Service "Nachschlagen", und
- Fig.7: eine schematische Darstellung von Lookup-Service "Invokation".

### Ausführungsformen der Erfindung

Es werden zwei grundsätzliche Arten von Schnittstellen verwendet, die nachstehend definiert werden. Bei einer Mensch-Maschine-Schnittstelle stellt eine bekannte Maschine bzw. ein bekanntes Gerät eine Schnittstelle zum Nutzer, d.h. zu einem Menschen zur Verfügung. Diese Schnittstelle wird im folgenden als Nutzer-Interface bezeichnet und ist derart gestaltet, daß der Nutzer, beispielsweise ein Reisender das Nutzer-Interface einfach bedienen kann.

Unter einer Maschine-Maschine-Schnittstelle wird im folgenden eine Verbindung zwischen bekannten Maschinen in Form von Automaten verstanden. Bei dieser Art Schnittstelle stellt sich das Problem, inwieweit damit zu einem Zeitpunkt, an welchem ein System definiert wird, was nachstehend als Definitions-Zeitpunkt bezeichnet wird, bzw. zum Zeitpunkt der Inbetriebnahme, was nachstehend als Inbetriebnahme-Zeitpunkt bezeichnet wird, Funktionalitäten realisiert werden können, die zu den Definitions- und Inbetriebnahme-Zeitpunkten noch nicht bekannt sind und erst zu einem späteren Zeitpunkt, der nachstehend als Einsatz-Zeitpunkt bezeichnet wird, bekannt werden.

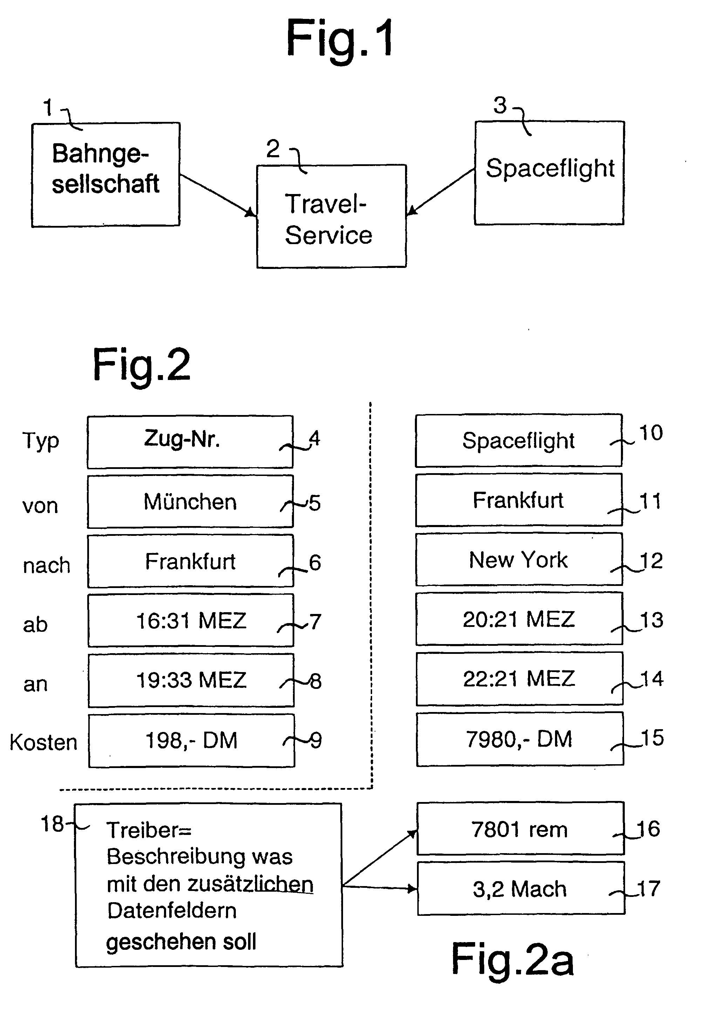

Die vorstehend skizzierte Problematik soll am Beispiel von Reiseverbindungen anhand von Fig.1 erläutert werden. Ein Reiseassistent 2 namens "Travel-Service" benötigt zur Planung einer Reise Information von einer Bahngesellschaft 1, beispielsweise der Deutschen Bundesbahn (DB) und einer Organisation 3, namens "Spaceflight"; hierbei wird unter Spaceflight ein - teilweise durch den Weltraum führender - Flug verstanden, der mittels eines mehrere Mach schnellen Flugkörpers in großer Höhe und einer dadurch bedingten starken Strahlungseinwirkung durchgeführt wird.

Zum Definitions-Zeitpunkt waren nur die klassischen Verbindungen, wie beispielsweise Zugverbindungen oder Flüge bekannt (siehe linker Teil von Fig.2); zum Definitions-Zeitpunkt war die Organisation Spaceflight unbekannt. Derartige Verbindungen können gemäß der Erfindung durch einige die Verbindung beschreibende Eigenschaften in Form eines sehr einfachen (primitiven) Abbildes der Wirklichkeit beschrieben werden. Alle wichtigen und benötigten Informationen bezüglich einer Zugverbindung sind in den Datenfeldern 2 bis 9 angegeben. Mit den entsprechenden Attributen können auch herkömmliche Flüge in entsprechenden Datenfelder dargestellt werden.

Mit einer solchen sehr einfachen Interface-Definition werden zunächst Geräte und das Gesamtsystem erstellt und in Betrieb genommen. Nach einigen Betriebsjahren gibt es eine neue für Reisende interessante Verbindung, nämlich die vorstehend eingeführte Organisation Spaceflight 3 (rechter Teil von Fig.2). Bei dieser Art des Reisens werden von den Nutzern, d.h. den Reisenden neben den in Fig.2 angeführten Datenfeldern 10 bis 15 noch weitere Informationen über das neuartige Reisemittel gefordert.

Beispielsweise kann es für die Reiseplanung wichtig sein, welcher Dosis an radioaktiver Strahlung (Datenfeld 16 in Fig.2a) ein Reisender ausgesetzt ist, oder ein anderer Reisender will wissen, mit welcher Mach-Zahl (Datenfeld 17 in Fig.2a) der Flugkörper unterwegs ist. Das heißt, das sehr einfache Abbild der Wirklichkeit muß erweitert werden.

Bei dem vorstehend beschriebenen, herkömmlichen Ansatz sind alle diese Eventualitäten zum Definitions-Zeitpunkt zwangsläufig nicht bekannt und können daher in den Standard als Schnittstellen-Definition nicht aufgenommen werden. Bei dem herkömmlichen Ansatz kann somit zum Definitions-Zeitpunkt für Bahnverbindungen nur das sehr einfache Abbild der Wirklichkeit in Form der Datenfelder 4 bis 9 bzw. in Analogie auch für bekannte Flugverbindungen geschaffen werden.

Bei der erfindungsgemäßen Lösung können zum Einsatzzeitpunkt weitere Informationen übertragen werden, deren Bedeutung in einem gleichzeitig mitübertragenen Teil Software erläutert wird, was durch Datenfeld 18 zum Ausdruck gebracht ist. Die Übertragung einer solchen Software wird in der nachstehend beschriebenen Weise durchgeführt. Die benötigte Funktionalität kann beispielsweise mit Hilfe des eingangs beschriebenen JAVA-Programmcodes und der Netzwerktechnologie JINI realisiert werden.

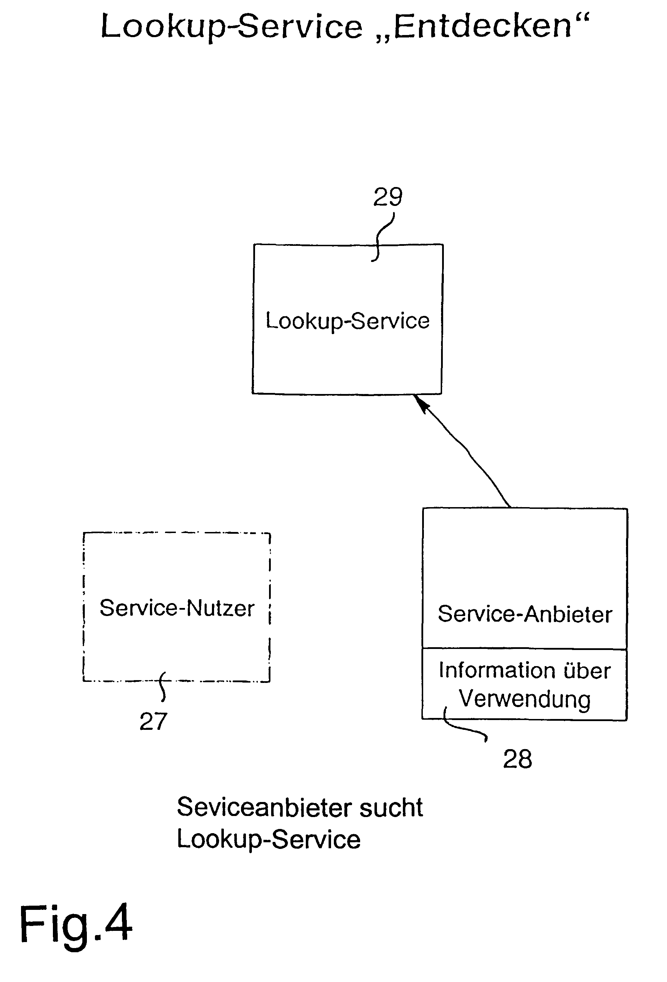

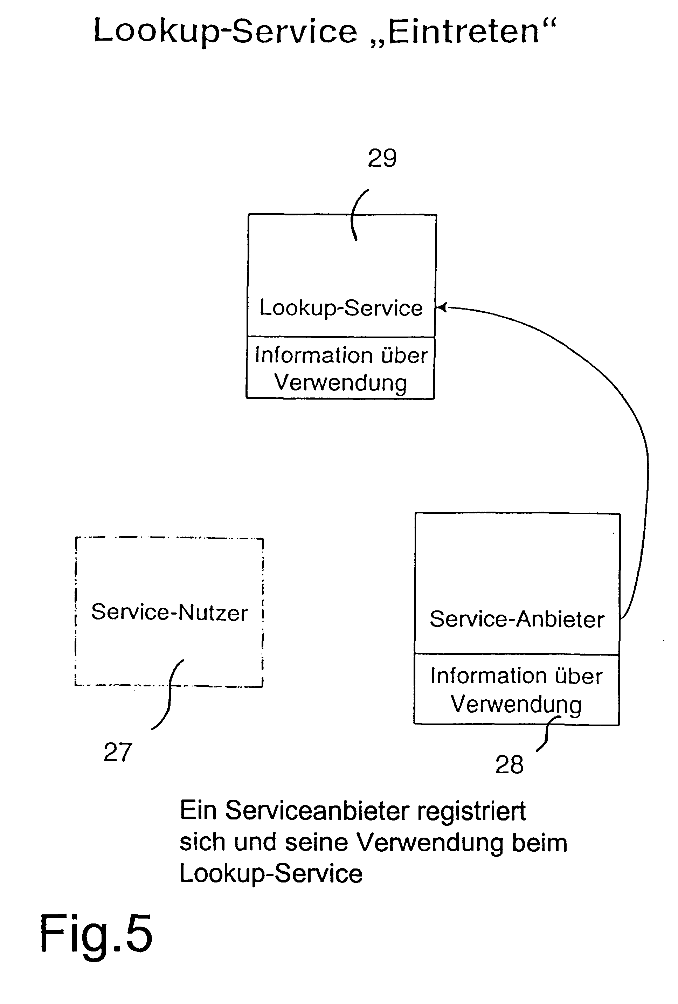

Zum Verständnis des Systems werden nachstehend einige Begriffe und Vorgänge erläutert, die in dem sogenannten flexiblen Interface-Verfahren verwendet bzw. durchgeführt werden. Zum Durchführen des flexiblen Interface-Verfahrens werden "Einheiten" benötigt. Hierbei kann eine Einheit zu dem einen Zeitpunkt eine Dienstleistung (Service) anbieten und zu einem anderen Zeitpunkt in Anspruch nehmen. Bietet eine solche Einheit zu einem Zeitpunkt einen Service an, so wird sie als Service-Anbieter 28 in Fig.4 bezeichnet. Nützt jedoch eine Einheit zu einem bestimmten Zeitpunkt einen Service, so wird sie als Service-Nutzer 27 bezeichnet. In Fig.4 und 5 ist jeweils der Block Service-Nutzer 27 gestrichelt wiedergegeben, da er bei den Einheiten "Entdecken" und "Eintreten" noch keine Rolle spielt.

Im folgenden wird beschrieben, wie ein Nutzer einen Anbieter findet, der den Service verwendet, usw.. Hierzu wird ein besonderer Service definiert, der als Lookup-Service 29 (Fig.4) bezeichnet ist.

Ein Service-Anbieter teilt einer oder mehreren zur Verfügung stehenden Einheiten, auf denen ein Lookup-Service verfügbar ist, zum einen mit, daß er als Service-Anbieter einen Service zur Verfügung stellt und teilt zum anderen mit, welcher Service von ihm als Service-Anbieter zur Verfügung gestellt wird. Weiterhin teilt er die zur Verwendung/Nutzung dieses angebotenen Service notwendige Information mit. Dieser in Fig.4 skizzierte Vorgang wird als "Entdecken" bezeichnet.

Der Lookup-Service 29 speichert seine "Kenntnisse" über den "entdeckten" Service-Anbieter 27, was in Fig.5 im Datenfeld 29 durch den Eintrag "Information über Verwendung" zum Ausdruck gebracht ist. Der in Fig.5 skizzierte Vorgang wird als "Eintreten" bezeichnet. Der Lookup-Service 29 kann gleichzeitig Kenntnisse über mehrere Service-Anbieter besitzen und entsprechend verarbeiten.

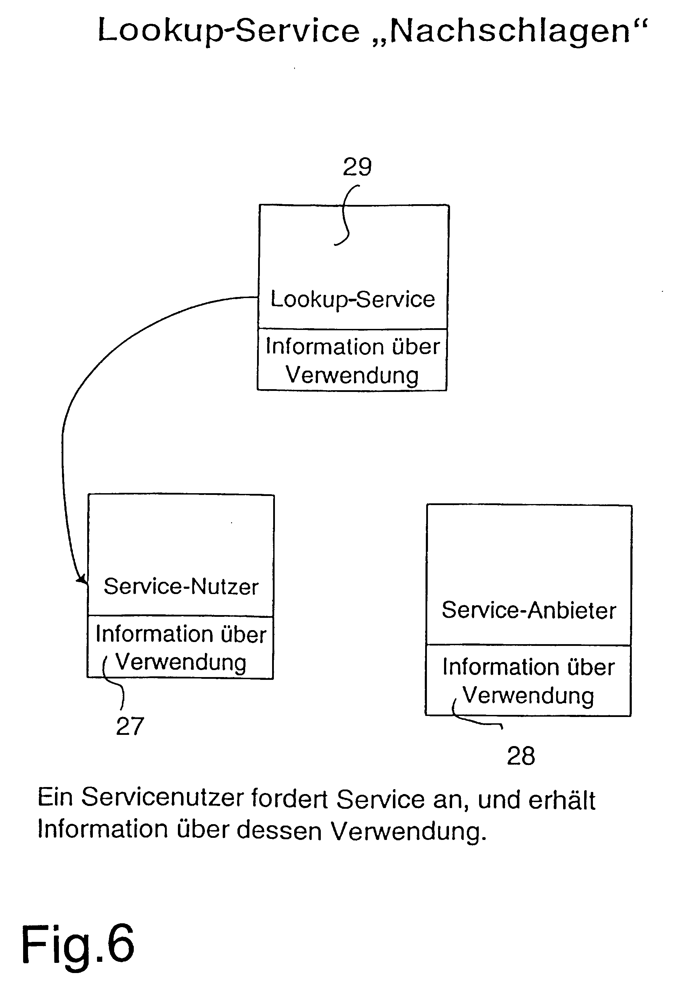

Benötigt nunmehr eine Einheit einen bestimmten Service, so wendet sie sich an einen oder mehrere Lookup-Services und fragt dort an, ob der benötigte Service bekannt ist. Ist dies der Fall, teilt der Lookup-Service, beispielsweise 29, der einen entsprechenden Service benötigenden Einheit mit, wie der oder die angebotenen Services zu verwenden sind bzw. wie darauf zurückgegriffen werden kann. Dieser in Fig.6 dargestellte Vorgang wird als "Nachschlagen" bezeichnet. Der Vorgang "Nachschlagen" ist in Fig.6 dadurch angedeutet, daß die Datenfelder 27 und 29, in denen jeweils zusätzlich eingetragen ist "Information über Verwendung", durch eine mit einer auf den Service-Nutzer 27 weisenden Pfeilspitze versehenen Linie verbunden sind.

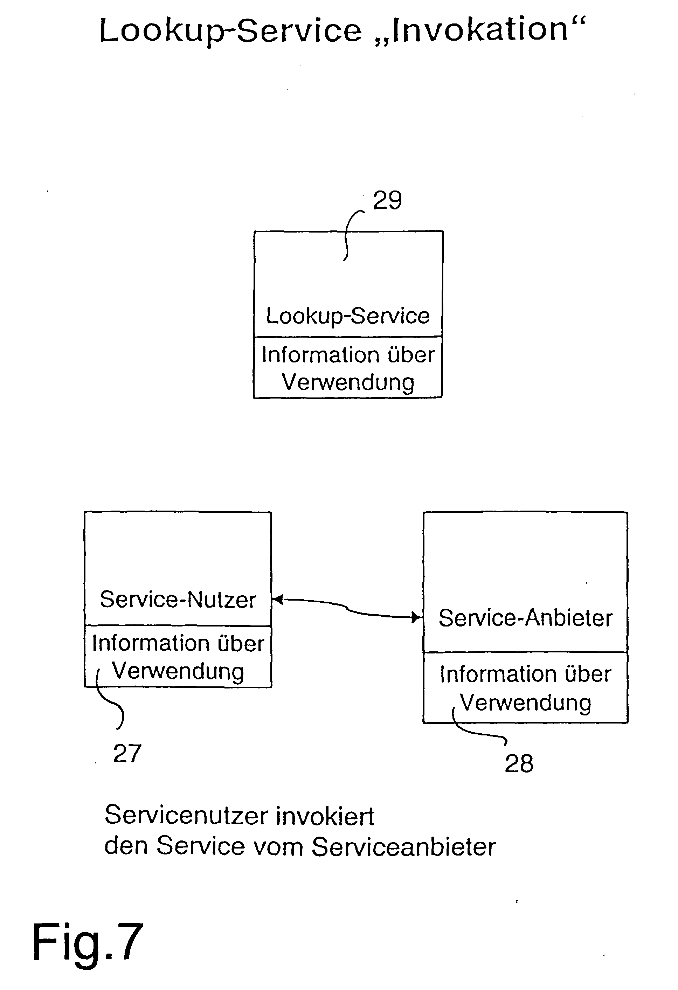

Da nun der Service-Nutzer 27 Kenntnis von der Verfügbarkeit des angebotenen Service sowie über dessen Verwendung hat, kann der Service-Nutzer 27 den vom Service-Anbieter 28 angebotenen Service ohne weiteres Zutun des Lookup-Service 29 verwenden. Dieser Vorgang wird als Lookup-Service-"Invokation" bezeichnet und ist in Fig.7 durch die mit zwei Pfeilspitzen versehene Verbindung zwischen den Datenfeldern 27 und 28 zum Ausdruck gebracht.

Es kann sinnvoll sein, die Kenntnis über einen angebotenen Service nur für einen begrenzten Zeitraum zu speichern, bzw. die Service-Invokation (Fig.7) zeitlich begrenzt zu gestalten. Ohne solche zeitlichen Begrenzungen kommt es sonst zu einer Anhäufung von Einträgen im Lookup-Service und/oder bei Service-Invokationen, was zu negativen Folgen führen könnte. Daher kann ein Service auch nur mit einer zeitlichen Begrenzung in Anspruch genommen werden. Dieser Vorgang wird als "Mieten" bezeichnet. Wird ein Service über eine solche zeitliche Begrenzung hinaus benötigt, so muß die Service-Invokation explizit verlängert werden. Der (die) Lookup-Service(s) befindet (befinden) sich in dem Reisebegleiter.

Um Services zu entdecken und zu verwenden, die lokal nicht verfügbar, jedoch an anderer Stelle in einem Lookup-Service bekannt sind, kann der Service-Nutzer einen örtlich entfernten Lookup-Service verwenden. Dies bedeutet, daß auch Lookup-Services in einem anderen Lookup-Service eingetragen sein können. Somit ist dieser Vorgang kaskadierbar. Der Service-Nutzer hat somit die Wahl, den geeigneten Service zu verwenden.

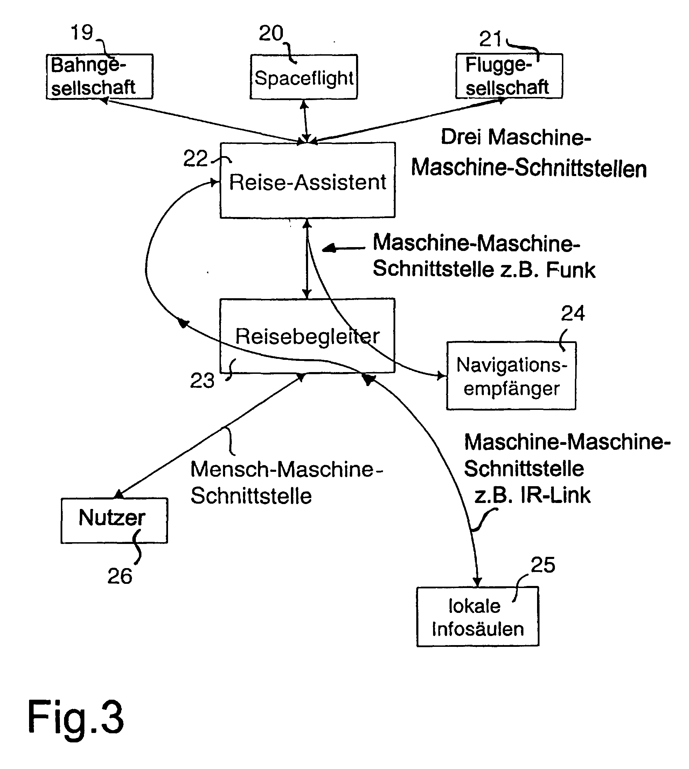

Die zur Planung und Durchführung der Reise benötigte Rechenleistung wird je nach Bedarf und Ressourcen durch den (die) Reise-Service(s) 2 (anschließend als Reiseassistent 22 (Fig.3) bezeichnet) oder durch den/die Reisebegleiter (23 in Fig.3) erbracht. So wird der serverseitige Reise-Service zwar in der Regel aus Energiegründen und wegen der höheren Rechnergeschwindigkeit die Berechnungen übernehmen. Wenn allerdings der Reisebegleiter nicht mehr im Kontakt zum Server des Reise-Service 2 steht, beispielsweise aufgrund von Störungen auf dem Übertragungsweg, muß der Reisebegleiter 23 in der Lage sein, die Reise zumindest bis zum nächsten Kontakt fortzuführen.

Dies wird erreicht, indem dem Reisebegleiter die aktuell beste Route zum Zielort bekannt ist, da sie ihm vom Reiseassistenten 22 bereits übermittelt worden ist; ferner kennt der Reisebegleiter 23 darüber hinaus noch eine oder mehrere Alternativen, mit denen er ans Ziel oder zumindest in eine günstige Position kommt, in welcher er beispielsweise wieder einen ordentlichen Funkempfang hat.

Diese Alternativen sind dem Reisebegleiter 23 vom Reiseassistenten 22 prophylaktisch übermittelt worden, wenn dem Reiseassistenten 22 beispielsweise bekannt ist, daß es an bestimmten Zwischenstationen sehr häufig Schwierigkeiten gibt, oder daß sich die Reise einem Gebiet nähert, von welchem bekannt ist, daß dort beispielsweise die Funkverbindungen sehr schlecht sind bzw. häufig abreißen.

Das bedeutet, der Reisebegleiter 23 muß daher über eine entsprechende interne Rechenleistung verfügen, die ausreichend bemessen sein muß, damit sie temporär genutzt werden und er über eine gewisse Zeit autonom agieren kann. Die Verteilung der Rechenleistung sowie die Aufteilung des Speicherinhaltes und der Zustandsinformation eines Rechenprozesses über das Gesamtsystem kann beispielsweise mit Hilfe der Netzwerktechnologie "JINI" und deren Smart-Caching genannte Funktionalität realisiert werden.

Als ein Ausführungsbeispiel wird nachstehend anhand von Fig.3 ein Szenario vorgestellt. Hierzu wird ein Reisender (Nutzer) 26 mit einem mobilen Reisebegleiter 23 ausgestattet, wie beispielsweise mit einem Smart-Phone, Mobilfunkgerät, Funkgerät, Organiser, Navigationsgerät, Reiseplanungsendgerät, elektronischen Touristen-, Hotel-, Bewirtungs-Führer, einer Uhr, PDA(Personal Digital Assistent), Laptop, PC, Pager, Smart-Card, Multimediaendgerät, oder anderen tragbaren Geräten. Ein solcher Reisebegleiter 23 bzw. ein von ihm in Anspruch genommener Reiseplanungsservice plant, überwacht und kontrolliert gegebenenfalls auch die Reise wie vorstehend bereits beschrieben.

Ein solcher Reisebegleiter kann eine oder mehrere Eingabemöglichkeiten, wie Tastaturen, eine Maus, einen Touchscreen, Voice, Pens aufweisen oder er kann biometrische Sensoren, Schrifterkennung, Scanner, Modem, Kamera, Mikrofone, Schalter, Beschleunigungssensoren verwenden. Ein Reisebegleiter kann auch eine oder mehrere Ausgabemöglichkeiten, wie beispielsweise Displays, analoge Anzeigeinstrumente, Monitore, Lautsprecher, Tonsignalgeber, Signalleuchten, Virtual-Reality Brillen, Headup Displays, Smart-Maps, Kopfhörer, Ohrhörer, Brailleschriftausgabe, Servomotoren, Vibratoren, Sprachausgabe, Drucker, Projektoren, Modem, Summer, u.ä. aufweisen.

Die einzelnen Funktionen werden realisiert, indem der Reisebegleiter 23 einen Reiseassistenten 22, beispielsweise ein Reisebüro oder einen Reiseplanungsservice über eine geeignete Verbindung, beispielsweise eine Funkverbindung zum Internet, u.ä. invokiert. Der Reiseassistent 22 ist damit ein Service-Anbieter im oben definierten Sinn. Er kann ein Automat, beispielsweise ein Computer mit Software und/oder ein Mensch sein. Als Automat kann der Reiseassistent 22 an beliebigen Stellen, beispielsweise ortsfest und/oder auch auf dem Reisebegleiter 23 realisiert werden. Der Reiseassistent 22 benötigt jedoch zum Betrieb weitere Services.

Beispielsweise benötigt er Reiseinformationen von einer Bahngesellschaft 19 (Fig.3) oder von dem Spaceflight 20 oder von einer Fluggesellschaft 21 (Fig.3). Die Service-Invokation wird dann über den Loopup-Service realisiert werden.

Die physikalischen Verbindungen zwischen den Service-Anbietern 19 bis 21 (Fig.3) und dem Reise-Assistenten 22 der in diesem Fall der Service-Nutzer ist, sind beispielsweise leitungsgebunden in Form von Internet, Telefon, Richtfunk, Stromnetz Standleitung, u.ä..

Hierzu wird der Reiseassistent 22 bis zur Service-Invokation (Fig.7) vorgehen und somit das Service-Angebot der Service-Anbieter in seiner Eigenschaft als Service-Nutzer nutzen.

Der Reiseassistent 22 ist aber auch in der Lage, weitere Service-Anbieter (24, 25 in Fig.3) über den Reisebegleiter 23 anzusprechen. Beispielsweise. wird zunächst eine lokale Infosäule 25 dem Lookup-Service im Reisebegleiter 23, beispielsweise über Infrarot-Verbindungen automatisch mitteilen, daß sie existiert.

Der Reiseassistent 22 hat beispielsweise über UMTS-Mobilfunk Verbindung mit dem Reisebegleiter 23 und erkennt so den Dienst der Infosäule 25. Die Infosäule 25 trägt ihr Service-Angebot in den Lookup-Service des Reisebegleiters 23 ein, und gibt auf diese Weise bekannt, daß sie einen Service anbietet. Der Reisesassistent 22 kann nun über den Lookup-Service des Reisebegleiters 23 auf das Service-Angebot des Service-Anbieters in diesem Fall der lokalen Infosäule 25 zugreifen. Reisebegleiter 23 und Reiseassistent 22 können daher jeweils als eine Art Router ein Auffinden von entfernten Lookup-Services unterstützen.

Ebenso kann er auch auf weitere, dort möglicherweise vorhandene lokale Lookup-Services zugreifen, die ihrerseits wieder Kenntnis von weiteren Service-Anbietern und deren Service-Angeboten haben. Dieses vorstehend als Kaskadierung beschriebene Verfahren kann beispeilsweise dazu benutzt werden, auf einen Lookup-Service am momentanen Aufenthaltsort und die dort dargebotenen Service-Leistungen zuzugreifen. (Ein derartiger Service wäre beispielsweise mit einer herkömmlichen lokalen Touristeninformation vergleichbar).

Durch die Verwendung des vorstehend beschriebenen flexiblen Interface-Verfahrens kann der Reiseassistent 22 die Funktionalität einer Info-Säule 25 auch dann nutzen, wenn die Funktionalität und/oder Existenz dieser Info-Säule 25 zum Definitionszeitpunkt unbekannt war. Solche Kommunikationsverbindungen sind ebenfalls als Services anzusehen, die bei dem neuen System entdeckt und invokiert werden können.

Steht dem Reisebegleiter 23 ein Navigationsempfänger 24 zur Verfügung, so kann der Reiseassistent 22 diesen Navigationsservice mittels des Lookup-Services des Reisebegleiters 23 verwenden, um Kenntnis über den Aufenthaltsort eines Reisenden zu erlangen, um auf diese Weise seine eigene Aufgabe besser erfüllen zu können.

Hierbei kann der Navigationsservice beispielsweise durch einen GPS-Empfänger realisiert sein, welcher entweder direkt im Reisebegleiter 23 integriert sein kann, oder für diesen als ein eigenständiges Gerät 24 beigestellt sein kann.

Der Navigationsservice kann auch mittels eines Satellitengestützten Navigationssystems, wie GPS, Glonass, Galileo oder auch mit Baken und/oder mit Trägheitssensoren wie Kreiseln, Trägheitsnavigationssystemen oder auch mit Radsensoren oder Kompassen realisiert sein. Ebenso können sonstige Funknavigationssysteme, insbesondere in der Luftfahrt übliche Navigationsverfahren, wie Loran, VOR, NDB, Area-NAV und/oder Funkkommunikationssysteme, wie GSM, W-CDMA (Wideband Code Devision Multiple Access), IS-95, IS-54, IS-136 (IS: Interim Standard) u.ä. realisiert sein.

Diese verschiedenen Navigationshilfsmittel, wie beispielsweise Informationssäulen, Informationsbaken, welche lokale externe Hilfsmittel darstellen, tragen sich im allgemeinen automatisch beim Lookup-Service des Reisebegleiters ein und sind damit aufgrund des "guten Kontaktes" zwischen Reisebegleiter und Reiseassistent auch dann, d.h. wenn sich die externen Hilfsmittel im Lookup-Service des Reisebegleiters eingetragen haben, auch für den ihm betreuenden Reiseassistenten sichtbar und somit auch nutzbar.

Ein Reiseassistent 22 kann mittels eines Navigationshilfsmittels beispielsweise die Reise besser überwachen als wenn der Nutzer/Reisende die Position stets per Hand eingeben muß. Der Navigations-Service kann neben der klassischen Satellitennavigation auch beispielsweise von einem Fortbewegungsmittel, wie einer U-Bahn oder auch einer fest installierten Bake angeboten werden. Selbstverständlich sind Eingaben durch den Nutzer, beispielsweise seine Position, spezielle Wünsche, besondere Vorkommnisse u.ä., ebenso möglich.

Nachstehend wird als weiteres Beispiel die Planung einer Reise erörtert. Der Nutzer schaltet seinen Reisebegleiter 23 ein, der über eine entsprechende Kommunikationsverbindung (Maschine-Maschnine-Schnittstelle) nach Reiseassistenten sucht und deren Verfügbarkeit sowie gegebenenfalls deren Leistungsfähigkeit dem Nutzer mitteilt. Dieser wählt daraufhin einen oder mehrere Reiseassistenten 22 aus dem Angebot aus und teilt dem oder den Reiseassistenten 22 beispielsweise seine speziellen Vorstellungen bezüglich Zielort, Zielankunftszeit, Abfahrtszeit sowie sonstige Informationen, beispielsweise ein Kostenlimit mit.

Der Reiseassistent 22 greift über die Maschine-Maschine-Schnittstelle in der im flexiblen Interface-Verfahren beschriebenen Weise auf einen Navigationsservice auf dem Reisebegleiter 23 zu und ermittelt so dessen aktuellen Aufenthaltsort. Der Reiseassistent 22 greift ebenso über die Maschine-Maschine-Schnittstelle in der im flexiblen Interface-Verfahren beschriebenen Weise auf Service-Anbieter, wie beispielsweise Fluggesellschaften 21, Bahngesellschaften 19, u.ä. zu.

Der Reiseassistent ermittelt nun unter den gegebenen Voraussetzungen günstige Routen zum Ziel oder auch nur die günstigste und schlägt diese dem Nutzer unter Verwendung der Mensch-Maschine-Schnittstelle auf dem Reisebegleiter vor. Der Nutzer wählt nun einen Vorschlag aus.

Daraufhin bereitet der Reiseassistent 22 die Reise vor, indem er beispielsweise Flüge, Hotels u.ä. bucht. Falls die Flüge, Hotelbuchungen u.ä. bezahlt werden sollen bzw. müssen, werden diese Buchungen über die Maschine-Maschine-Schnittstelle in der im flexiblen Interface-Verfahren beschriebenen Weise abgewickelt, indem der Reiseassistent einen oder mehrere Buchungs- und/oder Bezahlungsservices der Serviceanbieter in Form von Flug- und/oder Bahngesellschaften usw. invokiert. Auch hier wird wiederum deutlich, daß auch Services die zum Definitions- oder Inbetriebnahmezeitpunkt des Systems noch nicht bekannt waren, invokiert werden können.

Als weiteres Beispiel wird nunmehr die Durchführung einer Reise beschrieben. Gegebenenfalls meldet sich rechtzeitig vor dem geplanten Reisebeginn der Reiseassistent 22 über die Mensch-Maschine-Schnittstelle beim Nutzer und erinnert ihn an den Reisebeginn. Der Reiseassistent 22 führt den Nutzer über den Reisebegleiter 23 während der Reise zum Ziel. Diese Führung kann beispielsweise darin bestehen, daß der Reiseassistent 22 über einen invokierten Straßenplanungsservice, den Nutzer über ein Straßennetz bei einer Autofahrt zum Flughafen führt. Hierbei kann er mittels des ebenfalls invokierten Navigationsservice die Position des Nutzers überwachen, ihn führen und überprüfen, ob er rechtzeitig zum Abflug kommt.

Sollte das aus irgendwelchen Gründen nicht der Fall sein, so kann der Reiseassistent 22 über Buchungsservices die nötigen Flüge, Hotels etc. umbuchen und gegebenenfalls wieder bezahlen. Treten andere Störungen der Reise ein, beispielsweise hat der Nutzer Flugverbindungen verpaßt, kann der Reiseassistent 22 wiederum entsprechend reagieren und den Nutzer mit den entsprechenden Serviceleistungen versorgen. Kommt der Nutzer bzw. Reisende am Zielflughafen an, so ist der Reiseassistent 22 beispielsweise in der Lage, über einen Taxiservice ein Taxi zu bestellen.

Über die Notfallfunktionalität kann beim Eintreten eines Notfalls, beispielsweise aufgrund eines Autounfalls, einer plötzlich auftretenden Krankheit, u.ä., der Reiseassistent 22 entsprechende Maßnahmen, beispielsweise den Ruf von Rettungsdiensten einleiten, nachdem er beispielsweise über den Reisebegleiter 23 hierüber entsprechend informiert worden ist. Ist der Nutzer am Ziel, so kann gegebenenfalls der Reiseassistent 22 die korrekte Abwicklung der Reise, beispielsweise insbesondere hinsichtlich korrekter Abbuchungen über einen Kreditkarten-Überwachungsservice überprüfen und überwachen. Gegebenenfalls kann auch die korrekte Führung der Vielflieger-Bonus Konten des Nutzers über einen entsprechenden Service überwacht werden.

Da es sich bei dem Reisebegleiter 23 um ein mobiles Endgerät handelt, muß dieses immer wieder mit Energie versorgt werden, beispielsweise indem seine Akkus wieder aufgeladen werden. Hierzu können Ladestationen lokal zur Verfügung gestellt sein. Das Auffinden, Nutzen, Überwachen und auch Bezahlen kann dann wiederum durch Invokieren des Lookup-Service, eines Lade-Service und eines entsprechenden Bezahlungs-Services realisiert werden.

Ferner kann bei verschiedenen Kommunikationsvorgängen eine Authentifizierung nötig sein. Diese wird dann durch die Invokierung eines Authentifizierungs-Services realisiert. Auch hier wird wieder der Vorteil der jederzeit möglichen Anpassung des Systems deutlich, da beispielsweise ein überholtes Authentifizierungsverfahren, weil beispielsweise dessen Code entziffert worden ist, jederzeit durch einen moderneren Authentifizierungs-Service ersetzt werden kann.

Dieser Service kann dann beispielsweise zusätzlich noch zur Zugangskontrolle beispielsweise in Hotelzimmern, in die eigene Wohnung, Firmen, Sicherheitsbereiche, Kontrollbereiche, Bankautomaten, mobile oder fest installierte Telefone, Computer invokiert werden. Darüber hinaus können auch noch Zeiterfassungseinrichtungen, gegebenenfalls die Echtheit von Flugtickets, bestimmter Zahlungsmittel,u.ä. invokiert werden.

Die Aufgabenstellung Reiseplanung kann auch für ganz andere Zwecke von Interesse sein. So könnte beispielsweise ein Bahnunternehmen mit dem beschriebenen System unterstützt werden. Hierbei werden beispielsweise Züge mit mindestens einem Reisebegleiter ausgestattet, der in Kontakt mit einem oder mehreren Reiseassistenten stehen kann. Die Reiseassistenten können die Fahrt der Züge durch Invokation deren Navigationsservices u.U. festlegen, zumindest jedoch überwachen. Bei Verspätungen von einem oder mehreren Zügen kann der Reiseassistent entsprechende Maßnahmen beispielsweise das Anfordern und Einsetzen von Ersatzzügen, Verspätungsmeldungen, gegebenenfalls Umbuchungen, Reisepreisrückerstattungen, sowie Meldungen an die Reisebegleiter der Fahrgäste,u.ä., einleiten.

In ähnlicher Weise lassen sich auch Taxis, LKW-Flotten von Speditionsunternehmen, Firmen, Rettungsdienste, oder größere Flugzeugflotten lenken, indem beispielsweise ein neues Taxi bestellt wird oder ein anderer Rettungswagen angefordert wird oder gegebenenfalls auch Anschlußflüge verzögert werden.

## Patentansprüche

1. System zum verbesserten Versorgen eines Reisenden mit Reiseinformation, **gekennzeichnet durch**
mindestens eine als Reisebegleiter (23) bezeichnete, mitführbare Datenverarbeitungs- und Kommunikationseinrichtung, die zeitweise mit einem Netzwerk und/oder weiteren Datenverarbeitungseinheiten in Verbindung steht, als Mensch-Maschine-Schnittstelle fungiert und/oder eine Mensch-Maschine-Schnittstelle steuert,
eine oder mehrere als Reiseassistent/en (22) bezeichnete Datenverarbeitungseinrichtung/en, die entweder als Rechner oder Rechnerverbund implementiert sind und eine oder mehrere vor Antritt oder während einer Reise erforderliche Operation durchführt/en, die mit dem Reisebegleiter (23) zusammenwirken, und
mindestens eine Informationen anbietende Datenverarbeitungseinheit (24, 25), mit welcher der (die) Reiseassistent(en) (22) über den Reisebegleiter (23) ständig oder temporär in Verbindung steht (stehen),
wobei Rechenleistung und/oder Speicherinhalt und/oder Rechenprozesse auf einen oder mehrere Reisebegleiter und auf einen oder mehrere Reiseassistenten zeitlich und/oder örtlich dynamisch verteilt werden, und
die Verbindung zwischen Reiseassistent(en) und Reisebegleiter bzw. zwischen Reiseassistent(en) und/oder dem (den) von diesen benutzten Serviceanbieter(n) über ein oder mehrere Maschine-Maschine-Schnittstellen ausgeführt wird.

2. System nach Anspruch 1, **dadurch gekennzeichnet, dass** die Art des Zusammenwirkens über ein flexibles Interface-Verfahren erfolgt, das mindestens die Komponenten Service-Anbieter, Service-Nutzer und Lookup-Service aufweist und mindestens einen der Teilschritte eines Protokolls ausführt, wie Entdecken, wobei der Service-Anbieter die angebotenen Services mitteilt, und Eintreten, wobei der Lookup-Service Informationen über den Service-Anbieter speichert, Nachschlagen, wobei einem Service-Nutzer bei einem oder mehreren Lookup-Services alle Dienste mitgeteilt werden, welche gewisse Suchkriterien erfüllen und/oder zur Nutzung eines Dienstes notwendige Informationen enthalten, und Service-Invokation, wobei der Dienst eines Service-Anbieters durch den Service-Nutzer genutzt wird, und gegebenenfalls ein Mieten, wobei eine zeitlich begrenzte Inanspruchnahme von Services stattfindet.

3. System nach einem der vorhergehenden Ansprüche, **dadurch gekennzeichnet, dass** der (die) Reiseassistent(en) (22) unter Verwenden einer Maschine-Maschine-Schnittstelle über den Reisebegleiter (23) mit mindestens einer zusätzlichen Datenverarbeitungseinheit in Verbindung steht (stehen).

4. System nach einem der vorhergehenden Ansprüche, **dadurch gekennzeichnet, dass** Reisebegleiter (23) und/oder Reiseassistent (22) als eine Art Router ein Entdecken von entfernten Lookup-Services unterstützen.

5. System nach einem der vorhergehenden Ansprüche, **dadurch gekennzeichnet, daß** einem Reisebegleiter zur Durchführung einer Reise eine oder mehrere Routen übertragen werden und er eine Route (n) selbst zusammenstellt.

6. System nach Anspruch 5, **dadurch gekennzeichnet, dass** an den Reisebegleiter (23) weitere Informationen übertragen werden, der bei einer Störung in der Übertragung zu einem späteren Zeitpunkt auf diese Informationen zurückgreift.

7. System nach einem der vorhergehenden Ansprüche, **dadurch gekennzeichnet, dass** mit mindestens einer lokalen, sich in der Nähe eines Reisebegleiters (23) befindlichen Datenverarbeitungseinrichtung (24, 25) und/oder auch mit mindestens einer globalen Einheit (Internet) Verbindung aufgenommen wird.

8. System nach einem der vorhergehenden Ansprüche, **dadurch gekennzeichnet, dass** die Maschine-Maschine-Schnittstellen physikalisch als optische, drahtgebundene, auch steckbare, akustische und/oder mechanische Verbindungen ausgeführt sind.

9. System nach einem der vorhergehenden Ansprüche, **dadurch gekennzeichnet, dass** der Reisebegleiter mit mindestens einer Navigationseinrichtung ausgestattet ist.

10. System nach einem der vorhergehenden Ansprüche, **dadurch gekennzeichnet, dass** der Reisebegleiter mit mindestens einer Navigationseinrichtung (24) kommuniziert.

11. System nach einem der Ansprüche 9 oder 10, **dadurch gekennzeichnet, dass** die Navigationseinrichtung (24) mit einem satellitengestützten Navigationssystem (GPS, Glonass, Galileo) und/oder mit Baken und/oder mit Trägheitssensoren, Kreiseln, Trägheitsnavigationssystem und/oder mit Radsensoren und/oder mit Kompassen und/oder mit sonstigen Funknavigationssystemen kommuniziert.

12. System nach einem der vorhergehenden Ansprüche, **gekennzeichnet durch** mindestens eine am Körper tragbare Teilkomponente eines Reisebegleiters, wie ein einer Armbanduhr ähnliches Gerät, ein Handheld, in Schuhen unterbringbare Beschleunigungssensoren und/oder ein im Reisebegleiter integrierbares Gerät (Mobiltelefon, PDA, Photo & Video Kamera, elektronisches Zahlungsmittel).

13. System nach einem der vorhergehenden Ansprüche, **gekennzeichnet durch** einen Authentifizierungsservice, wobei dieser Dienst die Authentität einer Einheit, eines Dienstes oder einer Person **durch** Abwicklung eines bekannten Verfahrens prüft.

14. System nach einem der vorhergehenden Ansprüche, **dadurch gekennzeichnet, dass** der Reisebegleiter mit einer Notfallfunktionalität, welche ein Funktionalität im Sinne von Vorhandensein von spezieller Ablaufsteuerung und Daten-Kommunikationswegen ist, ausgestattet ist, durch die erforderlichen Maßnahmen automatisch eingeleitet werden.

15. System nach Anspruch 2, **dadurch gekennzeichnet, dass** der Lookup-Service und mindestens einer der Schritte Entdecken, Eintreten, Nachschlagen, Service-Invokation, gegebenenfalls Mieten und/oder dynamisches Verteilen von Rechenleistung und/oder von Speicherinhalt und/oder Rechenprozessen durch die Netzwerktechnologie "JINI" (eingetragene Marke) realisiert sind.

## Claims

1. A system for an improved supply of travel information to a traveler, **characterized in that**
at least one portable data processing and communication means, termed travel attendant (23), is linked temporarily to a network and/or further data processing units, functions as a man-machine interface and/or controls a man-machine interface, one or more data processing means, termed travel assistant(s) (22), are implemented either as a computer or computer network and carry out one or more operation(s) as necessary prior to starting out on, or during, a journey in cooperation with said travel attendant (23), and
at least one data processing unit (24, 25) offering information is continuously or temporarily in communication with said travel assistant(s) (22) via said travel attendant (23),
the computing capacity and/or also storage content and/or computing procedures being distributed among one or more travel attendants and also among one or more travel assistants dynamically in terms of time and/or space, and
linking said travel assistant(s) and travel attendant(s) or said travel assistant(s) and/or the service provider(s) used thereby being implemented via one or more machine-machine interfaces.

2. The system as set forth in claim 1, **characterized in that** the nature of said cooperation is via a flexible interface method comprising at least the components: service provider, service user and look-up service in implementing at least one of the actions of a protocol, such as discovery, in which the service provider communicates the offered services, and join, in which the look-up service stores information as to the service provider, look-up, in which a service user is informed by one or more look-up services all services satisfying defined search criteria and/or containing the information as needed for using a service, and service invocation, in which the service of a service provider is used by a service user, and, where necessary, hire, in which use of said services is claimed for a limited period of time.

3. The system as set forth in any of the preceding claims **characterized in that** said travel assistant(s) (22) in making use of a machine-machine interface communicate via said travel attendant (23) with at least one additional data processing unit.

4. The system as set forth in any of the preceding claims **characterized in that** travel attendant (23) and/or travel assistant (22) as a kind of router support discovering remote look-up services.

5. The system as set forth in any of the preceding claims **characterized in that** a travel attendant for implementing a journey is communicated one or more routes and it itself compiling a route or routes.

6. The system as set forth in claim 5 **characterized in that** further information is communicated to said travel attendant (23) which recourses to this information at a later point in time when communication is disrupted.

7. The system as set forth in any of the preceding claims **characterized in that** communication is made with at least one local unit in the vicinity of a travel attendant (23) and/or also with at least one global unit (Internet).

8. The system as set forth in any of the preceding claims
**characterized in that** said machine-machine interfaces are configured physically as optical, hard-wired, also plug-in type, acoustical and/or mechanical links.

9. The system as set forth in any of the preceding claims **characterized in that** said travel attendant is equipped with at least one navigational means.

10. The system as set forth in any of the preceding claims **characterized in that** said travel attendant communicates with at least one navigational means (24).

11. The system as set forth in claim 9 or claim 10 **characterized in that** said navigational means (24) communicates with a satellite supported navigation system (GPS, Glonass, Galileo) and/or with beacons and/or with inertial sensors, gyroscopes inertial navigation systems and/or with wheel sensors and/or with compasses and/or with other wireless navigation systems.

12. The system as set forth in any of the preceding claims **characterized in that** at least one sub-component of a travel attendant is carried on the body, such as a watch-like component, a handheld, shoe-accommodated acceleration sensors and/or a component suitable for integrating in said travel attendant (cell phone, PDA, photo and video camera, electronic means of payment).

13. The system as set forth in any of the preceding claims, **characterized in that** an authentication service checks the authenticity of a unit, service or person by sequencing a known method.

14. The system as set forth in any of the preceding claims, **characterized in that** said travel attendant is equipped with means for functioning in an emergency in the sense of the availability of a special sequence control and data communication paths for automatically activating the actions as needed.

15. The system as set forth in claim 2 **characterized in that** said look-up service and at least one of said steps, discovery, join, look-up, service invocation and, where necessary, hire and/or dynamic distribution of computing capacity and/or storage content and/or computing procedures are achieved by the JINI (registered trademark) network technology.

## Revendications

1. Système pour améliorer la communication d'informations de voyage destinées à un voyageur, **caractérisé par**
au moins un dispositif informatisé de communication, portable, nommé accompagnateur de voyage (23), qui est temporairement en liaison avec un réseau et/ou d'autres unités informatiques, et fait office d'interface homme - machine et/ou commande une interface homme - machine,
un ou plusieurs dispositif(s) informatisé(s), nommé(s) assistant(s) de voyage (22), qui est (sont) mis en oeuvre soit comme ordinateur soit comme réseau informatique et exécute(nt) une ou plusieurs opérations nécessaires avant d'entamer un voyage ou au cours d'un voyage, qui agissent de manière conjointe avec l'accompagnateur de voyage (23), et
au moins une unité informatique (24,25) offrant des informations, avec laquelle le (les) assistant(s) de voyage (22) est (sont) en liaison permanente ou temporaire par l'intermédiaire de l'accompagnateur de voyage (23),
dans lequel la capacité informatique et/ou la capacité de mémoire et/ou les processus informatiques sont répartis dynamiquement dans le temps et/ou dans l'espace à un ou plusieurs accompagnateur(s) de voyage et à un ou plusieurs assistant(s) de voyage, et
la liaison entre le (les) assistants de voyage et l'accompagnateur de voyage ou entre le (les) assistant(s) de voyage et/ou (le) (les) fournisseur(s) de services utilisés par ceux-ci s'effectue par le biais d'une ou de plusieurs interface(s) machine- machine.

2. Système selon la revendication 1, **caractérisé en ce que** le type d'action conjointe s'effectue par le biais d'un procédé d'interface souple, qui présente au moins les composants: fournisseur de services, utilisateur de services et service de consultation, et qui exécute au moins l'une des étapes partielles d'un protocole, comme la découverte, dans laquelle le fournisseur de services communique les services offerts, et l'entrée en action, dans laquelle le service de consultation mémorise les informations par l'intermédiaire du fournisseur de services, la recherche, dans laquelle toutes les prestations sont communiquées à un utilisateur de services pour un ou plusieurs service(s) de consultation, prestations qui remplissent certains critères de recherche et/ou contiennent des informations nécessaires pour l'utilisation d'une prestation, et l'appel de services, dans lequel la prestation d'un fournisseur de services est utilisée par l'utilisateur de services, et éventuellement une location de services, dans laquelle a lieu une exploitation des services limitée dans le temps.

3. Système selon l'une des revendications précédentes, **caractérisé en ce qu'**avec l'utilisation d'une interface machine - machine par le biais de l'accompagnateur de voyage (23), le (les) assistant (s) de voyage (22) est (sont) en liaison avec au moins une unité informatique supplémentaire.

4. Système selon l'une des revendications précédentes, **caractérisé en ce que** l'accompagnateur de voyage (23) et/ou l'assistant de voyage (22) font office d'assistance dans la découverte de services de consultation éloignés en qualité d'un type de guide d'itinéraire.

5. Système selon une des revendications précédentes, **caractérisé en ce que** un ou plusieurs itinéraires sont transmis à un accompagnateur de voyage pour la réalisation d'un voyage et **en ce qu'**il compose lui-même un ou plusieurs itinéraires.

6. Système selon la revendication 5, **caractérisé en ce que** des informations supplémentaires sont transmises à l'accompagnateur de voyage (23) qui, en cas de perturbation dans la transmission, fait ultérieurement de nouveau appel à cette information.

7. Système selon l'une des revendications précédentes, **caractérisé en ce que** l'on entre en liaison avec au moins une unité informatique locale (24,25) se trouvant à proximité d'un accompagnateur de voyage (23) et/ou également avec au moins une unité globale (Internet).

8. Système selon l'une des revendications précédentes, **caractérisé en ce que** les interfaces machine - machine sont exécutées physiquement en tant que liaisons optiques, câblées, également connectables, acoustiques et/ou mécaniques.

9. Système selon l'une des revendications précédentes, **caractérisé en ce que** l'accompagnateur de voyage est équipé d'au moins un dispositif de navigation.

10. Système selon l'une des revendications précédentes, **caractérisé en ce que** l'accompagnateur de voyage communique avec au moins un dispositif de navigation (24).

11. Système selon l'une des revendications 9 ou 10, **caractérisé en ce que** le dispositif de navigation (24) communique avec un système de navigation supporté par satellite (GPS, Glonass, Galileo) et/ou avec des balises et/ou des capteurs inertiels, des gyroscopes, systèmes de navigation inertiels et/ou avec des capteurs de roue et/ou des compas et/ou autres systèmes de radionavigation.

12. Système selon l'une des revendications précédentes, **caractérisé par** au moins un composant partiel d'un accompagnateur de voyage, portable sur le corps, tel un appareil analogue à une montre-bracelet, un capteur d'accélération portatif à main, pouvant être logé dans les chaussures et/ou un appareil pouvant être intégré dans l'accompagnateur de voyage (téléphone mobile, PDA, appareil photo § caméscope, moyens de paiement électroniques).

13. Système selon l'une des revendications précédentes, **caractérisé par** un service d'authentification, dans lequel ce service vérifie l'authenticité d'une unité, d'une prestation ou d'une personne par déroulement d'un processus connu.

14. Système selon l'une des revendications précédentes, **caractérisé en ce que** l'accompagnateur de voyage est équipé d'une fonctionnalité d'urgence qui en l'occurrence est constitué par l'existence d'une commande séquentielle spéciale et de voies de communications informatiques, au moyen de laquelle les mesures nécessaires sont enclenchées automatiquement.

15. Système selon la revendication 2, **caractérisé en ce que** le service de consultation et au moins l'une des étapes : découverte, entrée en action, recherche, appel de services, éventuellement location de services et/ou répartition dynamique de la capacité informatique et/ou de la capacité de mémoire et/ou des processus informatiques sont réalisés conformément à la technologie de réseau "JINI" (marque déposée).
